# EUROPÄISCHE PATENTSCHRIFT

(11) **EP 3 505 907 B1**
(45) Veröffentlichungstag und Bekanntmachung des Hinweises auf die Patenterteilung: **10.03.2021**
(21) Anmeldenummer: 18150098.4
(22) Anmeldetag: 02.01.2018
(51) Int. Cl.: G01N 3/32, F16H 35/00, F16H 37/14, F16H 25/20

(54) **PRÜFVORRICHTUNG**
TESTING DEVICE
DISPOSITIF DE CONTRÔLE

(43) Veröffentlichungstag der Anmeldung: 03.07.2019
(73) Patentinhaber: Hug, Joachim, 38678 Clausthal-Zellerfeld (DE); Henze, Sven, 38678 Clausthal-Zellerfeld (DE)
(72) Erfinder: Hug, Joachim, 38678 Clausthal-Zellerfeld (DE); Henze, Sven, 38678 Clausthal-Zellerfeld (DE)
(74) Vertreter: REHBERG HÜPPE + PARTNER

(56) Entgegenhaltungen:
- WO-A1-2013/171322
- DE-A1- 4 110 195
- DE-U1-202005 004 393
- GB-A- 2 012 017

## Beschreibung

Die vorliegende Erfindung betrifft eine Prüfvorrichtung. Mittels der Prüfvorrichtung erfolgt eine Belastung eines Prüflings mit einer dynamischen Prüfbelastung. Bei dem Prüfling kann es sich um ein beliebiges Werkstück oder Bauelement, beispielsweise ein Bauteil eines Kraftfahrzeugs wie eine Nockenwelle, handeln.

Die dynamische Prüfbelastung ist vorzugsweise eine mit einer festen oder variablen Frequenz, insbesondere sinusförmig, oszillierende Prüfbelastung, deren Mittelwert Null sein kann oder von Null abweichen kann. Die Prüfbelastung ist beispielsweise ein translatorischer Prüfweg, mit welchem der Prüfling in der Art eines "Shakers" bewegt wird. Möglich ist aber auch, dass ein in der Prüfvorrichtung erzeugter oszillierender Prüfweg über eine geeignete Antriebs- oder Getriebeverbindung umgewandelt wird in eine Prüf-Verschwenkung. Vorzugsweise ist die dynamische Prüfbelastung eine Prüfkraft mit einer vorgegebenen Wirkrichtung oder ein Prüfmoment, insbesondere ein Biegemoment oder ein Torsionsmoment. Hierbei kann eine Umwandlung eines erzeugten Prüfwegs oder einer erzeugten Prüf-Verschwenkung in eine Kraft oder in ein Biegemoment oder Torsionsmoment durch ein Federelement (beispielsweise eine gewendelte Feder, einen Federstab, eine Blattfeder, eine Torsionsfeder, eine Elastomerfeder o. ä.) erfolgen. Dabei kann ein Federfußpunkt des Federelements mit dem Prüfweg oder der Prüf-Verschwenkung beaufschlagt werden, während der andere Federfußpunkt des Federelements unmittelbar oder mittelbar an dem Prüfling abgestützt ist.

Prüfvorrichtungen der hier vorliegenden Art finden Einsatz beispielsweise zur Untersuchung einer Betriebsfestigkeit oder Schwingfestigkeit des Prüflings (insbesondere Dauer- und Zeitfestigkeit), zur Abschätzung einer Lebensdauer des Prüflings und/oder zur Schadensanalyse.

### STAND DER TECHNIK

EP 2 179 263 B1 offenbart eine Prüfvorrichtung für eine Prüfung eines Werkstücks mit einer statischen und einer überlagerten dynamischen Prüflast. In der Prüfvorrichtung wird das Werkstück mittels einer oberen und einer unteren Einspannvorrichtung, hier unter Zwischenschaltung eines Kraftaufnehmers, eingespannt. Mittels eines ersten Aktuators werden die beiden Einspannvorrichtungen mit einer statischen Prüflast beaufschlagt. Mittels eines zweiten, auf die obere Einspannvorrichtung einwirkenden Aktuators wird eine der statischen Prüflast überlagerte dynamische Prüflast erzeugt. In dem zweiten Aktuator ist die obere Einspannvorrichtung für eine translatorische Bewegung in Richtung der Prüflast geführt. An der oberen Einspannvorrichtung ist verschwenkbar ein Betätigungshebel angelenkt. In beiden Endbereichen dieses Betätigungshebels sind jeweils Endbereiche von Schwingen angelenkt, deren andere Endbereiche über zwei Kurbeltriebe angetrieben werden. Über die Drehzahl der Kurbeltriebe kann die Frequenz der dynamischen Prüfkraft vorgegeben werden, während die Amplitude der dynamischen Prüflast durch den Relativwinkel der beiden Schwingen eingestellt werden kann. Ergänzend wird in EP 2 179 263 B1 vorgeschlagen, die Amplitude der Prüflast durch eine Veränderung der Kurbelradien der Kurbeltriebe einzustellen. Eine derartige Veränderung des Kurbelradius der Kurbeltriebe soll hierbei über einen Doppelexzenter ermöglicht werden.

DE 20 2005 004 393 U1 offenbart eine Prüfvorrichtung, mittels welcher ein Werkstück mit einer dynamischen Prüfbelastung belastet werden soll. Hierbei soll die Amplitude der Prüfbelastung ohne Abschalten der Prüfvorrichtung verstellbar sein. In der Prüfvorrichtung treibt ein erster Antrieb eine Exzenterscheibe an, deren zylindrischer Außenumfang drehbar in einer Bohrung einer zweiten Exzenterscheibe geführt ist. An der zylindrischen Außenfläche der zweiten Exzenterscheibe stützt sich ein Pleuel ab, welches über einen Kreuzkopf mit einer Einspannvorrichtung für das Werkstück gekoppelt ist. Koaxial zu der Innenbohrung der zweiten Exzenterscheibe verfügt die zweite Exzenterscheibe über ein Ritzel, welches mit einer Innenverzahnung eines Hohlrads kämmt. Die Innenverzahnung des Hohlrads ist konzentrisch zu der Antriebsachse des ersten Antriebs und der ersten Exzenterscheibe orientiert. Das Hohlrad wird koaxial zu dieser Antriebsachse mittels eines zweiten Antriebs angetrieben. Treiben der erste Antrieb die erste Exzenterscheibe und der zweite Antrieb das Hohlrad mit derselben Drehzahl an, laufen die beiden Exzenterscheiben und das Hohlrad als Block um. Die Pleuelachse des Pleuellagers der Pleuelstange bewegt sich dann auf einer Kreisbahn, deren Radius von der Relativlage der beiden Exzenterscheiben abhängig ist, woraus eine translatorische Hin- und Herbewegung der Einspannvorrichtung resultiert, deren Amplitude dem genannten Radius entspricht. Eine Veränderung der Amplitude kann erfolgen durch Erzeugung einer relativen Verdrehung der beiden Exzenterscheiben, was durch kurzseitige Erzeugung eines Drehzahlunterschieds der beiden Antriebe erfolgen kann. Für eine andere Ausführungsform gemäß DE 20 2005 004 393 U1 erfolgt der Antrieb der ersten Exzenterscheibe unmittelbar durch den ersten Antrieb sowie der Antrieb des Hohlrads ebenfalls durch den ersten Antrieb unter Zwischenschaltung eines Doppel-Planetengetriebes. Ein Steg des Doppel-Planetengetriebes wird von dem zweiten Antrieb angetrieben ist. Die Gestaltung des Doppel-Planetengetriebes erfolgt hierbei derart, dass für ruhenden zweiten Antrieb und damit ruhenden Steg die erste Exzenterscheibe und das Hohlrad mit gleicher Drehzahl angetrieben werden, woraus sich eine konstante Amplitude für die translatorische Bewegung der Einspannvorrichtung ergibt. Der zweite Antrieb wird in diesem Fall lediglich betätigt zur Verstellung einer Amplitude der Bewegung der Einspannvorrichtung. Weitere in DE 20 2005 004 393 U1 beschriebene Ausführungsformen widmen sich einem möglichst vollständigen Massenausgleich zur Ermöglichung auch hoher Prüffrequenzen sowie der Integration des Exzenterantriebs in eine Prüfvorrichtung, mittels welcher variable Kraftwirkungsrichtungen für das zu prüfende Werkstück realisiert werden können.

WO 2011/076218 A1 offenbart eine Prüfvorrichtung, bei der ebenfalls eine Erzeugung einer translatorischen Beaufschlagung mittels einer Pleuelstange erfolgt, welche von einer Exzenterhülse angetrieben wird. Die Exzenterhülse ist hier drehfest mit einer Antriebswelle gekoppelt. Eine Verstellung der Exzentrizität der Exzenterhülse erfolgt dadurch, dass auf der Antriebswelle ein unter einem spitzen Winkel von beispielsweise 5 bis 15° geneigter Übertragungszapfen drehfest abgestützt ist, welcher unter einem Formschluss in Umfangsrichtung aufgenommen ist in einer Innenbohrung der Exzenterhülse. Mittels eines Aktuators kann eine translatorische Bewegung der Exzenterhülse gegenüber dem Exzenterzapfen herbeigeführt werden, welche entsprechend der Neigung des Exzenterzapfens zu einer Änderung der Exzentrizität führt. Hierbei erfolgt eine Verstellung der Exzentrizität im Bereich von 0 bis 2,5 mm.

DE 41 10 195 A1 ist nicht gattungsgemäß und offenbart eine Verstellvorrichtung für eine Nockenwelle, mittels welcher eine Relativverstellung zwischen einer Nockenwelle und einem Antriebsrad ermöglicht werden soll. Ein hülsenartiger Fortsatz des Antriebsrads ist mit einer innenliegenden Keilverzahnung ausgestattet. Ein Nockenwellenrad, das mit der Nockenwelle drehfest verbunden ist, weist eine außenliegende Keilverzahnung auf, wobei die Nockenwelle koaxial zum Antriebsrad gelagert ist. Zwischen der innenliegenden Keilverzahnung und der außenliegenden Keilverzahnung, von denen eine oder beide als Schrägverzahnung ausgebildet ist oder sind, ist ein drehfest gehaltenes, ebenfalls hülsenartiges Stellelement angeordnet, das im Bereich der inneren und äußeren Mantelfläche in die Keilverzahnungen eingreift. Durch eine axiale Bewegung des Stellelements wird somit über die Schrägverzahnung(en) eine relative Rotation des Antriebsrads und der Nockenwelle bewirkt. Das Stellelement ist zu diesem Zweck axial verschieblich gelagert und weist ein Innengewinde auf, womit das Stellelement eine Art Spindelmutter ausbildet. Ein Rotor eines Elektromotors weist eine Spindelwelle auf, deren Außengewinde mit dem Innengewinde der Spindelmutter verschraubt ist. Durch eine Rotation des Rotors wird infolge der Wirkung des Spindeltriebs das Stellelement mit dessen Spindelmutter auf dem Rotor mit dessen Spindelwelle axial verschoben, was die relative Rotation des Antriebsrads und der Nockenwelle zu Folge hat.

WO 2013/171322 A1 ist nicht gattungsgemäß und offenbart eine Nockenwelleneinheit mit zwei Nockenwellen. Die Nockenwellen sind konzentrisch zueinander angeordnet, sodass eine erste Nockenwelle innerhalb einer zweiten Nockenwelle angeordnet ist. Ein Verstellelement weist eine Hohlwelle auf, die innenliegend eine erste Schrägverzahnung und axial beabstandet hiervon und ebenfalls innenliegend eine zweite Schrägverzahnung aufweist. Die erste Schrägverzahnung des Verstellelements greift in eine entsprechende außenliegende erste Schrägverzahnung der ersten Nockenwelle ein. Die zweite Schrägverzahnung des Verstellelements greift in eine entsprechende außenliegende zweite Schrägverzahnung der beiden Nockenwelle ein. Das Verstellelement ist fest verbunden mit einer drehfest gehaltenen Spindelmutter, die auf einer Spindel läuft. Durch Verdrehen der Spindel wird somit das Verstellelement über die Spindelmutter axial verschoben. Da die miteinander in Wechselwirkung stehenden Schrägverzahnungen unterschiedliche Eingriffswinkel aufweisen, bewirkt die axiale Bewegung des Verstellelements eine relative Rotation der beiden Nockenwellen.

### AUFGABE DER ERFINDUNG

Der vorliegenden Erfindung liegt die Aufgabe zugrunde, eine alternative konstruktive Gestaltung einer Prüfvorrichtung vorzuschlagen, welche insbesondere hinsichtlich
- der Dauerfestigkeit der Prüfvorrichtung infolge der Wechselbelastung,
- der Veränderung der Amplitude der dynamischen Prüfbelastung auch während des Betriebs der Prüfvorrichtung,
- der Gewährleistung, dass die auf den Prüfling von der Prüfvorrichtung aufgebrachte dynamische Prüfbelastung innerhalb vorgegebener Grenzen einer Soll-Prüfbelastung (hinsichtlich der Frequenz, der Amplitude und/oder eines möglichst sinusförmigen dynamischen Anteils der Prüfbelastung) und/oder
- des Verstellbereichs für die Amplitude der dynamischen Prüfbelastung
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße Prüfvorrichtung verfügt über einen Antrieb, der eine Rotationsbewegung erzeugt und bei welchem es sich vorzugsweise um ein elektrisches Antriebsaggregat handelt. Von dem Antrieb der Prüfvorrichtung verläuft der Kraftfluss über ein Exzentergetriebe. Das Exzentergetriebe steht (unmittelbar oder mittelbar unter Zwischenschaltung von Getriebeelementen) mit dem Antrieb in Antriebsverbindung, so dass das Exzentergetriebe von dem Antrieb mit einer Antriebsdrehzahl um eine Antriebsachse verdreht wird. Hierbei kann die Antriebsdrehzahl der Antriebsdrehzahl des Antriebs entsprechen oder bei Zwischenordnung eines Getriebeelements von dieser abweichen.

Das Exzentergetriebe weist ein Exzenter-Abtriebselement auf, über welches ein Abtrieb von dem Exzentergetriebe zu dem Prüfling zur Erzeugung der dynamischen Prüfbelastung erfolgt. Beispielsweise handelt es sich bei dem Exzenter-Abtriebselement um einen auf einer Kreisbahn bewegten Antriebszapfen, auf welchem drehbar ein Antriebspleuel gelagert ist, dessen dem Antriebszapfen abgewandter Endbereich einen dynamischen Prüfweg ausführt.

Das erfindungsgemäß eingesetzte Exzentergetriebe weist ein erstes Exzenterelement auf. Das erste Exzenterelement ist drehbar um die Antriebsachse des Exzentergetriebes gelagert. Das erste Exzenterelement weist eine Lagerfläche auf. Bei dieser Lagerfläche kann es sich um eine äußere zylindrische Mantelfläche handeln. Vorzugsweise handelt es sich um eine innere hohlzylindrische innere Lagerfläche. Die Lagerachse der Lagerfläche ist mit einer Exzentrizität e₁ exzentrisch zu der Antriebsachse angeordnet.

Das Exzentergetriebe weist ein zweites Exzenterelement auf. Das zweite Exzenterelement ist drehbar um die Lagerachse gegenüber der Lagerfläche des ersten Exzenterelements abgestützt. Dies erfolgt vorzugsweise unter Zwischenordnung eines Gleit- oder Wälzlagers zwischen den beiden Exzenterelementen.

Um eine Verstellung des Hubs oder der Amplitude der dynamischen Prüfbelastung herbeiführen zu können, weist das Exzentergetriebe eine Verstelleinrichtung auf. Mittels der Verstelleinrichtung ist ein relativer Drehwinkel der Exzenterelemente veränderbar.

In der erfindungsgemäßen Prüfvorrichtung sind zwei unterschiedliche Betriebsarten möglich:
- In einem Prüfbetrieb, in dem keine Veränderung der relativen Drehwinkel der Exzenterelemente durch die Verstelleinrichtung erfolgt, laufen die beiden Exzenterelemente "im Block um", was bedeuten soll, dass diese keine Relativbewegung zueinander unter Veränderung des relativen Drehwinkels ausführen. In diesem Prüfbetrieb erfolgt eine Prüfbelastung des Prüflings mit konstanter Amplitude der dynamischen Prüfbelastung.
- Des Weiteren ist ein Verstellbetrieb möglich, welcher außerhalb des Prüfbetriebs erfolgt oder auch in den Prüfbetrieb integriert sein kann. In diesem Verstellbetrieb erfolgt eine Veränderung der Amplitude der Prüfbelastung durch eine Betätigung der Verstelleinrichtung. Die Bestätigung der Verstelleinrichtung führt zu einer Veränderung des relativen Drehwinkels der Exzenterelemente. Diese Veränderung des relativen Drehwinkels der Exzenterelemente hat wiederum eine Veränderung der Amplitude der dynamischen Prüfbelastung des Prüflings zur Folge.

Für aus dem Stand der Technik bekannte Ausführungsformen (vgl. DE 20 2005 004 393 U1) basiert die Verstelleinrichtung auf dem Einsatz von einem zusätzlich zu dem genannten elektrischen Antrieb eingesetzten weiteren elektrischen Antrieb, wobei dann beide Antriebe die beiden Exzenterelemente so mit einer Drehzahl beaufschlagen, dass diese für eine dynamische Prüfbelastung mit konstanter Amplitude im Block umlaufen, während für eine Verstellung der Amplitude der dynamischen Prüfbelastung gezielt auf die Phasenlage und/oder die Drehzahl der beiden elektrischen Antriebe Einfluss genommen werden muss. Dies stellt hohe Anforderungen an die Regelung der beiden elektrischen Antriebe. So müssen beispielsweise die beiden elektrischen Antriebe eine exakt korrelierte Phasenlage der beiden Exzenterelemente erzeugen können und diese auch halten können, selbst wenn auf die Exzenterelemente unter Umständen beträchtliche oszillierende Lasten infolge der Prüfbelastungen wirken.

Die Erfindung geht hier erstmals einen anderen Weg: Für die erfindungsgemäße Ausgestaltung weist die Verstelleinrichtung einen Aktuator auf, mittels dessen ein translatorischer Verstell-Weg eines Antriebselements des Exzentergetriebes erzeugt werden kann (und mittels dessen insbesondere auch ein einmal herbeigeführter Verstell-Weg gehalten werden kann). Hierbei kann im Rahmen der Erfindung der Aktuator unmittelbar den translatorischen Verstell-Weg des Antriebselements erzeugen. Möglich ist aber auch, dass zwischen den Aktuator und das Antriebselement eine beliebige getriebliche Verbindung zwischengeordnet ist. So kann beispielsweise der Aktuator mit einem Hebelteil eines verschwenkbar gelagerten Betätigungshebels gekoppelt sein, während das Antriebselement mit dem anderen Hebelteil des Betätigungshebels gekoppelt sein kann.

In der erfindungsgemäßen Prüfvorrichtung ist des Weiteren ein Umwandlungsgetriebe vorhanden. Das Umwandlungsgetriebe wandelt den translatorischen, von dem Aktuator erzeugten Verstell-Weg des Antriebselements um in einen Verstell-Drehwinkel eines Abtriebselements. Erfindungsgemäß sind das Antriebselement und das Abtriebselement derart mit den Exzenterelementen gekoppelt, dass der Verstell-Drehwinkel mit einer Veränderung des relativen Drehwinkels der Exzenterelemente korreliert, so dass auf diese Weise eine Veränderung der Amplitude der dynamischen Prüfbelastung herbeigeführt werden kann.

Die erfindungsgemäße Ausgestaltung soll anhand eines möglichen Ausführungsbeispiels erläutert werden, ohne dass eine Einschränkung der Erfindung auf dieses Ausführungsbeispiel erfolgen soll: Möglich ist, dass ein Linearantrieb einen translatorischen Verstell-Weg eines Antriebselements erzeugt, wobei das Antriebselement drehfest mit dem zweiten Exzenterelement gekoppelt ist. In diesem Fall kann das Umwandlungsgetriebe den translatorischen Verstell-Weg umwandeln in einen Verstell-Drehwinkel des Abtriebselements, welches hier unmittelbar als erstes Exzenterelement ausgebildet sein kann oder drehfest mit diesem gekoppelt sein kann. In diesem Fall entspricht der von dem Umwandlungsgetriebe erzeugte Verstell-Drehwinkel unmittelbar der Veränderung des relativen Drehwinkels der Exzenterelemente.

Im Rahmen der Erfindung kommt somit eine andere Verstell-Mechanik und -Kinematik als für den Stand der Technik zum Einsatz. Es kann auch erstmals ein translatorischer Aktuator oder Linearantrieb eingesetzt werden, um eine Veränderung der Amplitude der dynamischen Prüfbelastung zu verursachen. Unter Umständen kann hier eine Steuerung oder Regelung des Aktuators erfindungsgemäß vereinfacht werden, da der Aktuator nach einer einmal herbeigeführten Verstellung lediglich einen herbeigeführten translatorischen Verstell-Weg halten muss, ohne dass eine komplexe Steuerung oder Regelung einer Phasenlage von zwei Drehantrieben erforderlich ist, wie dies gemäß dem Stand der Technik (hier DE 20 2005 004 393 U1) erforderlich ist.

Für die Ausgestaltung des Umwandlungsgetriebes gibt es im Rahmen der Erfindung vielfältige Möglichkeiten. Gemäß einem Vorschlag der Erfindung weist das Umwandlungsgetriebe einen Spindeltrieb auf. In dem Spindeltrieb bildet die Spindel das Antriebselement. Um die Herbeiführung des translatorischen Verstell-Wegs der Spindel zu ermöglichen, ist die Spindel axial bewegbar gelagert. Da die Spindel entsprechend dem zweiten Exzenterelement rotiert, ist die Spindel darüber hinaus verdrehbar gelagert. Hingegen bildet die Spindelmutter des Spindeltriebs das Abtriebselement, so dass die Spindelmutter drehfest mit dem ersten Exzenterelement gekoppelt ist. Hierbei ist die Spindelmutter verdrehbar gelagert, um mit dem ersten Exzenterelement rotieren zu können. Um die Umwandlung der axialen Bewegung der Spindel in einen Verstell-Drehwinkel bzw. eine Veränderung des relativen Drehwinkels der Exzenterelemente durch den Spindeltrieb zu ermöglichen, ist die Spindelmutter nicht axial bewegbar gelagert oder abgestützt.

Für die konstruktive Ausgestaltung des Spindeltriebs gibt es vielfältige Möglichkeiten. So ist beispielsweise nicht zwingend erforderlich, dass der Spindeltrieb relative Drehwinkel zwischen Spindel und Spindelmutter über mehrere Umdrehungen ermöglicht. Vielmehr ist es ausreichend, wenn der Spindeltrieb einen relativen Drehwinkel der Spindel und der Spindelmutter ermöglicht, die den angestrebten Verstell-Drehwinkel und damit der Veränderung des relativen Drehwinkels der Exzenterelemente und letzten Endes der gewünschten Veränderung der Amplitude der dynamischen Prüfbelastung entspricht. So kann der Spindeltrieb auch nur einen relativen Drehwinkel von 180° oder sogar weniger ermöglichen. Hinsichtlich der konstruktiven Ausgestaltung beispielsweise des Gewindes oder einer Gewindenut der Spindelmutter, eines Gewindes oder einer Gewindenut der Spindel (beispielsweise hinsichtlich der Gewinde- oder Nutgeometrie und/oder einer Steigung und eines etwaigen Eingriffselements zwischen Spindel und Spindelmutter) können im Rahmen der Erfindung beliebige, dem Fachmann bekannte Ausführungsformen Einsatz finden.

Für einen besonderen Vorschlag der Erfindung ist der Spindeltrieb als Kugelumlauf-Gewindetrieb ausgebildet. Der Einsatz eines derartigen Kugelumlauf-Gewindetriebs zeichnet sich durch eine kleine Reibung aus, womit sich ein hoher Wirkungsgrad für die Betätigung der Verstelleinrichtung ergibt. Möglich ist auch eine vorgespannte Ausgestaltung des Kugelumlauf-Gewindetriebs, woraus sich eine spielfreie Ausgestaltung des Spindeltriebs ergibt, die insbesondere angesichts der dynamischen Prüfbelastung oder auch einer etwaigen Wechsel-Belastung vorteilhaft ist.

Um trotz des für die Funktion des Spindeltriebs erforderlichen axialen Freiheitsgrads der Spindel die drehfeste Antriebsverbindung der Spindel mit dem zweiten Exzenterelement zu ermöglichen, ist für einen weiteren Vorschlag der Erfindung die Spindel über ein Kupplungselement mit dem zweiten Exzenterelement gekoppelt. Dieses Kupplungselement überträgt die Drehbewegung der Spindel, aber überträgt den translatorischen Verstell-Weg der Spindel nicht. Möglich ist hierbei beispielsweise, dass als Kupplungselement eine Wellen-Narben-Verbindung mit axialem Eingriff, aber Formschluss in Umfangsrichtung Einsatz findet, beispielsweise eine Verbindung über einen sich in eine axiale Nut erstreckenden Querstift, eine Verbindung über eine sich in eine axiale Nut erstreckende Passfeder, eine Verbindung über eine Keilwelle oder eine Zahnwelle, eine Verbindung über ein Kerbzahnprofil oder ein Polygonprofil, wobei hierbei vorzugsweise ein Formschluss in Umfangsrichtung spielfrei ausgebildet ist, was durch eine Vorspannung in Umfangsrichtung erzielt werden kann. Kugelumlauf-Gewindetriebe werden auch als Kugelgewindetriebe bezeichnet, wobei mögliche, im Rahmen der Erfindung einsetzbare Ausgestaltungen auch in der Norm ISO 3408-01 beschrieben und normiert sind. Möglich ist auch, dass ein sogenannter Rollenumlauf-Gewindetrieb Einsatz findet. Möglich ist aber auch, dass für das genannte Kupplungselement Kupplungen mit Wälzkörpern, wie Kugeln oder Rollen, Einsatz finden, wobei die Wälzkörper eine Axialbewegung der Spindel relativ zu dem zweiten Exzenterelement ermöglichen, in dem die Wälzkörper entlang mindestens einer Nut der Spindel und/oder des zweiten Exzenterelements abwälzen können, während die Wälzkörper eine drehfeste Verbindung zwischen der Spindel und dem zweiten Exzenterelement in Umfangsrichtung schaffen. Möglich ist auch hier eine vorgespannte, spielfreie Ausgestaltung eines derartigen, auf Wälzkörpern basierenden Kupplungselements.

Da die Lagerachse der Exzenterelemente einerseits und die Antriebsachse des Exzentergetriebes andererseits eine Exzentrizität e₁ aufweist, ist eine Übertragung der Drehbewegung der Spindel um die Antriebsachse zu der Drehbewegung des ersten Exzenterelements um die Lagerachse mit einer Exzentrizität oder einem radialen Versatz erforderlich. Aus diesem Grund wird für eine mögliche Ausgestaltung der erfindungsgemäßen Prüfvorrichtung vorgeschlagen, dass die Spindel über ein Kupplungselement mit dem zweiten Exzenterelement gekoppelt ist. Dieses Kupplungselement überträgt eine Drehbewegung der Spindel zu dem zweiten Exzenterelement. Zusätzlich gleicht dieses Kupplungselement die Exzentrizität e₁ zwischen der Verdrehung des zweiten Exzenterelements um die Lagerachse und der Verdrehung der Spindel um die Antriebsachse aus. Dieses Kupplungselement kann beliebig ausgebildet sein. Beispielsweise kann es sich bei diesem Kupplungselement um eine Kardanwelle mit zwei Kardangelenken in Z-Anordnung handeln. Für eine bevorzugte Ausgestaltung der Erfindung handelt es sich bei dem Kupplungselement um eine Kupplung mit einer drehfest mit der Spindel verbundenen Antriebsscheibe sowie eine drehfest mit dem zweiten Exzenterelement verbundene Abtriebsscheibe sowie einer Zwischenscheibe. Hierbei ist die Zwischenscheibe über erste, über den Umfang verteilte Kuppelstangen mit der Antriebsscheibe verbunden, während die Zwischenscheibe auf der anderen Seite über zweite, ebenfalls über den Umfang verteilte Kuppelstangen mit der Abtriebsscheibe verbunden ist. Je nach Schwenkwinkel der Kuppelstangen kann ein unterschiedlicher Axialversatz der Antriebsscheibe gegenüber der Abtriebsscheibe gewährleistet werden, wobei dennoch eine Synchronität der Übertragung der Drehbewegung von der Antriebsscheibe zu der Abtriebsscheibe gewährleistet ist. Hinsichtlich einer möglichen derartigen einsetzbaren Kupplung wird lediglich beispielhaft auf die als "Schmidt-Kupplung" (eingetragene Marke) bezeichnete Kupplung gemäß der website www.schmidt-kupplung.com verwiesen. Eine Kupplung eines derartigen Typs führt unter Umständen zu einem gegenüber dem Einsatz einer Kardanwelle also Kupplungselement reduzierten axialen Baugröße.

Gemäß einer Weiterbildung der Erfindung betätigt der Aktuator einen translatorisch bewegten Antriebskörper. Der Antriebskörper ist über eine Lagereinheit, insbesondere ein Wälzlager, mit der Spindel gekoppelt. Die Lagereinheit überträgt die translatorische Bewegung des Antriebskörpers, bei welcher es sich um den translatorischen Verstell-Weg handeln kann, aber ermöglicht eine relative Verdrehung der Spindel gegenüber dem Antriebskörper. Auf diese Weise kann gewährleistet werden, dass die Spindel während des Prüfbetriebs der Prüfvorrichtung entsprechend dem Antrieb durch den elektrischen Antrieb rotiert, während der Aktuator in dem Prüfbetrieb ausschließlich eine eingenommene Position des Antriebskörpers halten muss.

Die Erfindung schlägt in weiterer Ausgestaltung vor, dass zwischen dem Aktuator (und insbesondere zwischen der vorgenannten Lagereinheit) ein Ausgleichselement angeordnet ist. Das Ausgleichselement überträgt die translatorische Bewegung des Aktuators, wobei das Ausgleichselement aber einen radialen Versatz oder einen Winkelfehler der Wirkachse des Aktuators und der Antriebsachse, um welche die Spindel rotiert, ausgleichen kann. Auf die Spindel und damit den Spindeltrieb wirkt einerseits die über die Exzenterelemente übertragene Prüfbelastung. Andererseits wirkt auf die Spindel auch eine von dem Aktuator aufgebrachte Verstellkraft oder Haltekraft. Somit kann die Spindel und der Spindeltrieb beträchtlichen Belastungen ausgesetzt sein, wobei sich (insbesondere für die Ausgestaltung des Spindeltriebs als Kugelumlauf-Gewindetrieb oder Rollenumlauf-Gewindetrieb) herausgestellt hat, dass ein radialer Versatz oder ein Winkelfehler der Wirkachse des Aktuators gegenüber der Antriebsachse zu einer deutlich reduzierten Lebensdauer des eingesetzten Spindeltriebs führen kann. Dieser Reduzierung der Lebensdauer kann durch Einsatz des Ausgleichselements entgegengewirkt werden. Für die konstruktive Ausgestaltung des Ausgleichselements gibt es vielfältige Möglichkeiten. Um lediglich ein Beispiel zu nennen, kann das Ausgleichselement als biegeweiche Betätigungsstange ausgebildet sein, deren einer Endbereich mit der Spindel gekoppelt ist, während der andere Endbereich von dem Aktuator mit dem Verstell-Weg translatorisch bewegt wird.

Ein weiterer Vorschlag der Erfindung widmet sich der Ausgestaltung des Exzentergetriebes. Vorgeschlagen wird, dass das erste Exzenterelement von einem (ein- oder mehrteiligen) Exzentergehäuse ausgebildet ist oder mit diesem verbunden ist. Im Inneren des Exzentergehäuses kann dann zumindest teilweise die Verstelleinrichtung, der Spindeltrieb, der Kugelumlauf-Gewindetrieb oder der Rollenumlauf-Gewindetrieb, das zuvor genannte Kupplungselement, welches eine Drehbewegung der Spindel überträgt, aber den translatorischen Verstell-Weg der Spindel nicht überträgt, das vorgenannte Kupplungselement, welches eine Drehbewegung der Spindel überträgt und die Exzentrizität e₁ zwischen der Lagerachse und der Antriebsachse ausgleicht, das zweite Exzenterelement und/oder können Wälzlager, über die das zweite Exzenterelement an das Lagerfläche des ersten Exzenterelements drehbar gelagert ist, angeordnet sein, wobei hierbei einzelne, eine beliebige Anzahl oder sämtliche vorgenannten Bauelemente in dem Inneren des Exzenter-Gehäuses angeordnet sein können. Hierdurch ergibt sich eine radial kompakt bauende Bauweise des Exzentergehäuses mit den darin angeordnete Bauelementen. Das Exzentergehäuse kann hierbei als in Umfangsrichtung geschlossenes Gehäuse ausgebildet sein, oder zumindest teilweise Öffnungen aufweisen, wobei das Exzentergehäuse auch (zumindest abseits des ersten Exzenterelements) käfigartig oder mit in Umfangsrichtung verteilt angeordneten Gehäusestreben ausgebildet sein kann, die das erste Exzenterelement mit der Spindelmutter verbinden können.

Der Antrieb der Prüfvorrichtung, bei dem es sich vorzugsweise um einen elektrischen Antriebsmotor zur Erzeugung einer Drehbewegung handelt, kann beliebig ausgebildet sein und ein beliebiges Bauelement des Exzentergetriebes verdrehen. Vorzugsweise steht der Antrieb über einen Riemen mit einem Antriebsrad des Exzentergetriebes in Antriebsverbindung. Der Einsatz eines derartigen Riemens hat sich als Vorteil hinsichtlich der Laufruhe herausgestellt, wobei der Antrieb über den Riemen auch spielfrei gestaltet sein kann. Der Einsatz eines Riemens für den Antrieb hat sich auch als wartungsarm herausgestellt. Während der Riemen infolge integrierter Verstärkungen oder Stahlseile eine geringe Elastizität aufweisen kann, ist dieser unter Umständen auch angesichts seiner schwingungsdämpfenden Wirkung vorteilhaft. Das Antriebsrad des Exzentergetriebes kann hierbei an beliebiger Stelle des Exzentergetriebes angeordnet sein. Möglich ist, dass das Antriebsrad von dem vorgenannten Exzentergehäuse getragen wird bzw. das Exzentergehäuse in einer Innenbohrung aufnimmt. Hierbei kann das von dem Riemen angetriebene Antriebsrad beispielsweise in einem Axialbereich zwischen dem ersten Exzenterelement und der Spindelmutter angeordnet sein.

Möglich ist des Weiteren, dass sich innenliegend von dem Antriebsrad das erste Exzenterelement, das Exzentergehäuse oder eine Antriebsverbindung des ersten Exzenterelements und das zweite Exzenterelement oder eine Antriebsverbindung des zweiten Exzenterelements erstrecken.

Für die erfindungsgemäße Ausgestaltung der Prüfvorrichtung ist vorzugsweise ein Antriebszapfen für ein Antriebspleuel mit einer Exzentrizität e₂ gegenüber der Lagerachse des zweiten Exzenterelements angeordnet. Auf diese Weise kann je nach relativem Drehwinkel der Exzenterelemente eine maximale Amplitude der dynamischen Prüfbelastung herbeigeführt werden, bei welcher sich der Antriebszapfen mit der maximalen Exzentrizität Eₘₐₓ = e₁ + e₂ bewegt, während sich für einen anderen relativen Drehwinkel der Exzenterelemente eine minimale Exzentrizität Eₘᵢₙ = e₁ - e₂ ergibt. Wenn für die Exzentrizität e₁ der Lagerachse gegenüber der Antriebsachse einerseits und die Exzentrizität e₂ des Antriebszapfens gegenüber der Lagerachse des zweiten Exzenterelements e₁ = e₂ gilt, beträgt die minimale Exzentrizität Eₘᵢₙ Null. Möglich ist beispielsweise, dass eine Prüfvorrichtung für einen Prüfbetrieb zunächst mit der minimalen Exzentrizität Eₘᵢₙ = 0 hochgefahren wird und dann für das Erreichen einer Prüfdrehzahl bzw. Prüffrequenz durch relative Verdrehung der Exzenterelemente die Amplitude auf die Soll-Amplitude eingestellt wird.

Dies kann beispielsweise vorteilhaft sein für das Durchlaufen einer Resonanzfrequenz für eine überkritische Prüfung des Prüflings durch die Prüfvorrichtung.

Für die relative Lage des Aktuators, des Antriebs und des Exzentergetriebes gibt es grundsätzlich vielfältige Möglichkeiten. Für eine erfindungsgemäße Ausgestaltung der Prüfvorrichtung wird vorgeschlagen, dass der Aktuator seitlich von dem Exzentergetriebe angeordnet ist und/oder der Antrieb über dem Exzentergetriebe angeordnet ist. Bei Anordnung des Exzentergetriebes seitlich von dem Aktuator kann das Exzentergetriebe über einen Schwenkhebel mit dem seitlich angeordneten Aktuator gekoppelt sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt stark schematisiert eine Prüfvorrichtung.
- **Fig. 2**: zeigt schematisch eine konkretere Ausgestaltung einer Prüfvorrichtung.
- **Fig. 3**: zeigt Exzenterelemente eines Exzentergetriebes einer Prüfvorrichtung mit einem relativen Drehwinkel der Exzenterelemente für eine minimale Exzentrizität Eₘᵢₙ, wobei hier Eₘᵢₙ = 0 ist.
- **Fig. 4**: zeigt die Exzenterelemente gemäß Fig. 3 für einen relativen Drehwinkel der Exzenterelemente für eine maximale Exzentrizität Eₘₐₓ.
- **Fig. 5**: zeigt eine konstruktive Ausgestaltung eines Details eines Exzentergetriebes einer Prüfvorrichtung.
- **Fig. 6**: zeigt eine konstruktive Ausgestaltung einer Prüfvorrichtung in einem Horizontal-schnitt.
- **Fig. 7**: zeigt die Prüfvorrichtung gemäß Fig. 6 in einer Ansicht mit Blickrichtung in horizontale Richtung.

### FIGURENBESCHREIBUNG

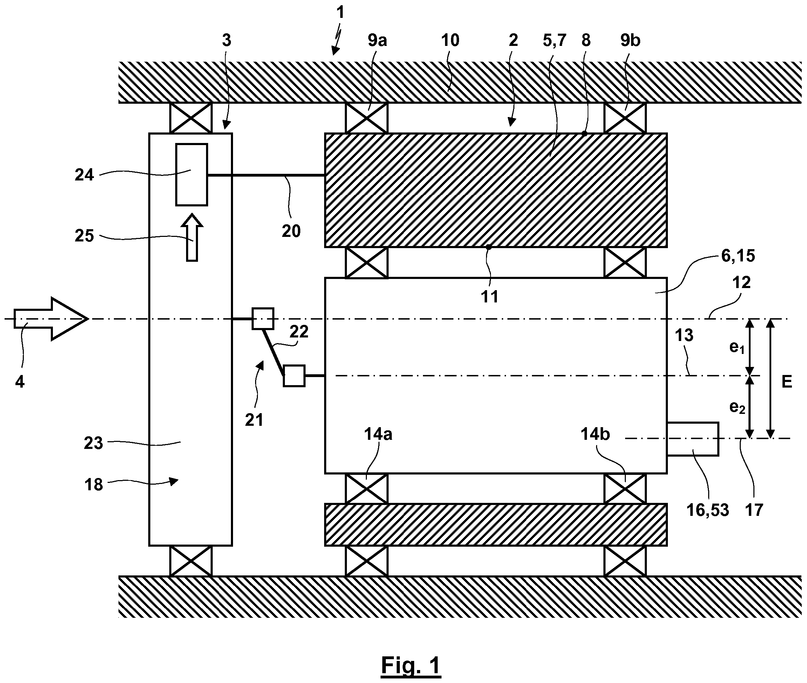

**Fig. 1** zeigt stark schematisiert einen Teil einer Prüfvorrichtung 1. In der Prüfvorrichtung 1 erfolgt ein Antrieb eines Exzentergetriebes 2 über ein Umwandlungsgetriebe 3. Das Umwandlungsgetriebe 3 wird über einen hier nicht dargestellten Antrieb mit einer Antriebsdrehzahl und mit einem Antriebsmoment 4 angetrieben.

Das Exzentergetriebe 2 verfügt über zwei Exzenterelemente 5, 6. Das Exzenterelement 5, welches hier auch als "erstes Exzenterelement" bezeichnet ist, ist als Exzenterhülse 7 ausgebildet. Eine äußere Lagerfläche 8 ist zylindrisch ausgebildet. Im Bereich der äußeren Lagerfläche 8 ist die Exzenterhülse 7 über Wälzlager 9a, 9b an einem Gehäuse 10 der Prüfvorrichtung 1 drehbar gelagert. Eine zylindrische Innenfläche der Lagerhülse 8 ist exzentrisch zu der äußeren Lagerfläche 8 angeordnet und bildet eine innere Lagerfläche 11. Die Exzenterhülse 7 rotiert infolge der Wälzlager 9a, 9b um eine ortsfeste Antriebsachse 12, welche der Längsachse der zylindrischen äußeren Lagerfläche 8 entspricht. Hingegen definiert die Längsachse der zylindrischen inneren Lagerfläche 11 eine Lagerachse 13. Die Antriebsachse 12 und die Lagerachse 13 sind mit einer Exzentrizität e₁ versetzt zueinander angeordnet. An der inneren Lagerfläche 11 ist über Wälzlager 14a, 14b das zweite Exzenterelement 6 drehbar gelagert, wobei das zweite Exzenterelement 6 als zylindrische Welle 15 ausgebildet ist. Infolge dieser Lagerung der Welle 15 über die Wälzlager 14a, 14b an der inneren Lagerfläche 11 der Exzenterhülse 7 kann die Welle 15 um die Lagerachse 13 rotieren. Mit einer Exzentrizität e₂ beabstandet von der Lagerachse 13 trägt das zweite Exzenterelement 6 ein als Antriebszapfen 16 ausgebildetes Exzenter-Abtriebselement 53. Der Antriebszapfen 16 gibt eine Antriebszapfenachse 17 vor.

Für eine Rotation des ersten Exzenterelements 5 rotiert die Lagerachse 13 um die Antriebsachse 12, womit auch der Vektor der Exzentrizität e₁ in der Ebene, die quer zur Antriebsachse 12 orientiert ist, rotiert. Für eine Rotation des zweiten Exzenterelements 6 um die Lagerachse 13 relativ zu dem ersten Exzenterelement 5 rotiert ebenfalls der Vektor der Exzentrizität e₂ der Antriebszapfenachse 17 gegenüber der Lagerachse 13. Der Vektor der gesamten Exzentrizität E ergibt sich somit aus der Überlagerung der Vektoren der Exzentrizitäten e₁, e₂. Werden die beiden Exzenterelemente 5, 6 mit derselben Drehzahl angetrieben, so dass diese und das Exzentergetriebe 2 "im Block" umlaufen, ändert sich der Betrag des Vektors der gesamten Exzentrizität E nicht, während der Vektor der gesamten Exzentrizität E um die Antriebsachse 12 rotiert.

Der Antriebszapfen 16 dient zur Lagerung eines Antriebspleuels 19, welches drehbar im Bereich eines Antriebspleuelauges auf dem Antriebszapfen 16 gelagert ist, während der andere Endbereich des Antriebspleuels 19 unmittelbar oder mittelbar mit dem Prüfling verbunden ist und vorzugsweise translatorisch entsprechend der Wirkachse der dynamischen Prüfbelastung geführt ist.

In einem Prüfbetrieb erfolgt der Antrieb der Exzenterelemente 5, 6 mit derselben Drehzahl. Hingegen erfolgt in einem Verstellbetrieb eine Verstellung der gesamten Exzentrizität E durch eine Veränderung des relativen Drehwinkels der Exzenterelemente 5, 6, woraus sich eine Veränderung der Winkel der Vektoren der Exzentrizitäten e₁, e₂ ergibt. Zur Ermöglichung einerseits des Prüfbetriebs und andererseits des Verstellbetriebs (welche unabhängig voneinander ausgeführt werden können oder auch gleichzeitig ausgeführt werden können) findet in der Prüfvorrichtung 1 eine Verstelleinrichtung 18 Einsatz, die das Umwandlungsgetriebe 3 aufweist. In dem Prüfbetrieb ist das Umwandlungsgetriebe 3 über eine erste, drehfeste Antriebsverbindung 20 mit dem ersten Exzenterelement 5 verbunden, so dass das Umfangsgetriebe 3 die Antriebsdrehzahl und das Antriebsmoment 4 von dem Antrieb auf das erste Exzenterelement 5 überträgt. Des Weiteren überträgt in dem Prüfbetrieb das Umwandlungsgetriebe 3 über eine weitere drehfeste Antriebsverbindung 21 die Antriebsdrehzahl und das Antriebsmoment 4 des Antriebs an das zweite Exzenterelement 6. Da das Umwandlungsgetriebe 3 um die Antriebsachse 12 rotiert, während das zweite Exzenterelement 6 um die Lagerachse 13 rotiert, verfügt die drehfeste Antriebsverbindung 21 über ein Kupplungselement 22, welches (insbesondere ohne Verlust der Synchronität der Rotationsbewegung des Umwandlungsgetriebes 3 und des zweiten Exzenterelements 6) die Übertragung der Antriebsbewegung trotz der Exzentrizität e₁ ermöglicht. Bei dem Kupplungselement 22 handelt es sich beispielsweise um eine Kardanwelle mit zwei Kardan-Gelenken in Z-Anordnung oder eine einen Versatz ausgleichende Kupplung mit mehreren über Koppelstange gekoppelten Scheiben, wie dies eingangs erläutert worden ist.

Um einen Verstellbetrieb zu ermöglichen, weist das Umwandlungsgetriebe 3 ein Antriebselement 23 auf, welches über die Antriebsverbindung 21 drehfest mit dem zweiten Exzenterelement verbunden ist, sowie ein Abtriebselement 24 auf, welches über die Antriebsverbindung 20 drehfest mit dem ersten Exzenterelement 5 gekoppelt ist. Während des Prüfbetriebs ist die relative Lage des Antriebselements 23 und des Abtriebselements 24 unverändert. Hingegen erfolgt für den Verstellbetrieb eine Veränderung der relativen Lage des Abtriebselements 24 gegenüber dem Antriebselement 23, was infolge der Antriebsverbindungen 20, 21 mit einer Veränderung der relativen Lage der Exzenterelemente 5, 6 und damit eine Veränderung des Betrags der gesamten Exzentrizität E zur Folge hat. Die Veränderung der relativen Lage des Abtriebselements 24 gegenüber dem Antriebselement 23 ist in Fig. 1 schematisch mit einer Verstellung 25 gekennzeichnet.

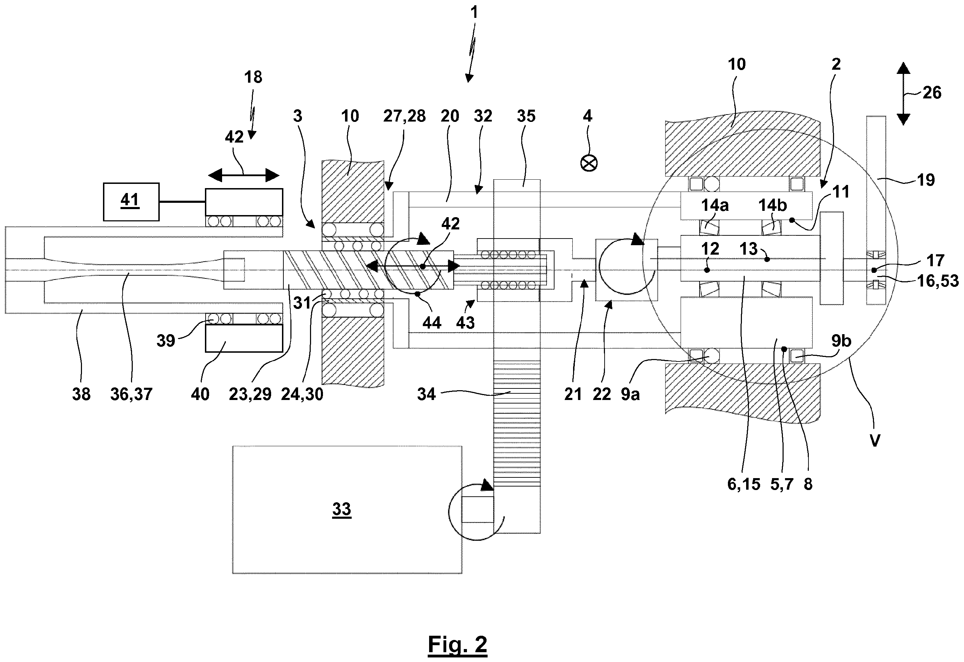

Auch **Fig. 2** zeigt eine schematische Darstellung einer Prüfvorrichtung 1, wobei hier aber bereits eine detailliertere Darstellung gewählt ist als in Fig. 1. In Fig. 2 werden hinsichtlich der Funktion und/oder Ausgestaltung den Bauelementen gemäß Fig. 1 entsprechende Bauelemente mit denselben Bezeichnungen und Bezugszeichen gekennzeichnet.

Gemäß Fig. 2 ist das Exzentergetriebe 2 im Wesentlichen entsprechend Fig. 1 mit einer Exzenterhülse 7 und einer Welle 15 und daran gehaltenem Antriebszapfen 16 ausgebildet. Zu erkennen ist hier auch das auf dem Antriebszapfen 16 gelagerte Antriebspleuel 19, welches eine dynamische Prüfbelastung 26 erzeugt.

Das Umwandlungsgetriebe 3 der Verstelleinrichtung 18 ist gemäß Fig. 2 als Spindeltrieb 27 ausgebildet, der hier wiederum als Kugelumlauf-Gewindetrieb 28 ausgebildet ist. Der Spindeltrieb 27 weist eine Spindel 29 sowie eine Spindelmutter 30 auf. Für die Ausbildung des Spindeltriebs 27 als Kugelumlauf-Gewindetriebs 28 erfolgt die Kopplung der Spindel 29 mit der Spindelmutter 30 über umlaufende Kugeln 31.

Die Spindelmutter 30 ist über die drehfeste Antriebsverbindung 20 drehfest und hier starr mit dem Exzenterelement 5 gekoppelt. Für das dargestellte Ausführungsbeispiel bilden das Exzenterelement 5, die Antriebsverbindung 20 und die Spindelmutter 30 ein langgestrecktes Exzentergehäuse 32, in welchem, wie im Folgenden noch erläutert wird, weitere Bauelemente des Exzentergetriebes 2 und der Antriebsverbindung 21 angeordnet sind.

Über einen Antrieb 33, insbesondere einen elektrischen Antriebsmotor erfolgt über einen Riemen 34 ein Antrieb eines Antriebsrads 35. Das Antriebsrad 35 ist von der Mantelfläche des Exzentergehäuses 32 getragen oder ausgebildet, wobei dies vorzugsweise ungefähr mittig zwischen dem Exzentergetriebe 2 und der Spindelmutter 30 erfolgt.

Auf der dem Exzentergetriebe 2 abgewandten Seite ist die Spindel 29 starr mit einem Ausgleichselement 36, hier einer biegeweichen, aber axial steifen Betätigungsstange 37 verbunden. Auf der der Spindel 29 abgewandten Seite ist das Ausgleichselement 36 an einer Kopplungshülse 38 befestigt, welche sich von dem Befestigungsort wieder zurück in Richtung der Spindel 29 erstreckt und das Ausgleichselement 36 und den Endbereich der Spindel 29 umgibt. Die Kopplungshülse 38 ist über eine Lagereinheit 39 innenliegend in einem Antriebskörper 40 drehbar, aber axial fixiert gelagert. Mittels eines Aktuators 41 kann der Antriebskörper 40 parallel zur Erstreckung der Spindel 29 und parallel zur Antriebsachse 12 über einen translatorischen Verstell-Weg 42 bewegt werden, welcher dem Verstell-Weg 42 der das Antriebselement 23 bildenden Spindel 29 entspricht. Mittels des Ausgleichselements 36 kann ein axialer Versatz und/oder ein Winkelfehler zwischen der Spindel 29 und der Kopplungshülse 38, der Lagereinheit 39, des Antriebskörpers 40 und der Betätigungsrichtung des Aktuators 41 ausgeglichen werden.

Auf der dem Exzentergetriebe 2 zugewandten Seite ist die Spindel 29 über das Kupplungselement 22 mit dem Exzenterelement 6 gekoppelt. Zusätzlich zu dem Kupplungselement 22 findet in der Antriebsverbindung 21 zwischen der Spindel 29 und dem Exzenterelement 6 ein weiteres Kupplungselement 43 Einsatz. Dieses Kupplungselement 43 gewährleistet eine drehfeste Übertragung der Drehbewegung der Spindel 29 über das Kupplungselement 22 an das Exzenterelement 6, während dieses Kupplungselement 43 eine axiale Verschiebung in der Antriebsverbindung 21 ermöglicht. Wie eingangs erläutert kann dieses Kupplungselement 43 beispielsweise als Keilwelle, Polygon-Kupplung, axial verschiebliche Passfederverbindung oder auch, wie hier dargestellt, mit in axialen Nuten geführten Kugeln oder Rollen ausgebildet sein, wobei vorzugsweise in Umfangsrichtung ein spielfreier Formschluss gewährleistet ist.

Der Betrieb der Prüfvorrichtung 1 gemäß Fig. 2 ist wie folgt:
In dem Prüfbetrieb mit einer konstanten Amplitude der dynamischen Prüfbelastung 26 erfolgt ein Betrieb des Aktuators 41 derart, dass der Antriebskörper 40 seine Position nicht ändert. Zu diesem Zweck kann der Aktuator 41 eine ausreichende Haltekraft aufbringen oder auch eine Bremse an dem Aktuator 41 betätigt werden. Dies hat zur Folge, dass auch die axiale Position der Spindel 29 gegenüber der Spindelmutter 30 fest ist, womit auch der Drehwinkel zwischen der Spindel 29 und der Spindelmutter 30 fest vorgegeben ist. Infolge der drehfesten Antriebsverbindungen 20, 21 ist damit auch der relative Drehwinkel der Exzenterelemente 5, 6 fest vorgegeben, woraus sich auch eine fest vorgegebene gesamte Exzentrizität E ergibt, mit welcher sich die Antriebszapfenachse 17 auf einer Kreisbahn um die Antriebsachse 12 dreht. Somit erzeugt das Antriebspleuel 19 eine dynamische Prüfbelastung 26 mit konstanter Amplitude, welche von dem konstanten relativen Drehwinkel der Exzenterelemente 5, 6 abhängt. Für den Prüfbetrieb laufen die Exzenterelemente 5, 6, das Exzentergehäuse 32, die Spindelmutter 30, die Spindel 29, das Kupplungselement 43 und das Kupplungselement 22 "im Block" um. Die Antriebsbewegung für diese im Block umlaufenden Bauelemente wird erzeugt durch den Antrieb des Antriebsrads 35 über den Riemen 34 durch den Antrieb 33. Mit der Spindel 29 rotiert auch das Ausgleichselement 36 und die Kopplungshülse 38, wobei die Rotationsbewegung infolge der Lagereinheit 39 nicht auf den Antriebskörper 40 und den Aktuator 41 übertragen wird.

In einem Verstellbetrieb erzeugt der Aktuator 41 einen Verstell-Weg 42 des Antriebskörpers 40. Dieser Verstell-Weg 42 des Antriebskörpers 40 wird über die Lagereinheit 39, die Kopplungshülse 38 und das Ausgleichselement 36 an die Spindel 29 übertragen. Der hierdurch erzeugte Verstell-Weg 42 der Spindel 39 hat zur Folge, dass sich in dem Spindeltrieb 27 der relative Drehwinkel zwischen der Spindelmutter 30 und der Spindel 29 verändert, womit sich auch infolge der Antriebsverbindungen 20, 21 der relative Drehwinkel der Exzenterelemente 5, 6 verändert, was mit einer Verstellung der gesamten Exzentrizität E einhergeht und eine Veränderung der Amplitude der dynamischen Prüfbelastung 26 zur Folge hat. Gleichzeitig kann der Verstell-Weg 42 der Spindel 29 durch eine durch das Kupplungselement 43 gewährleistete Axialverschiebung in der Antriebsverbindung 21 ausgeglichen werden. Mittels des Spindeltriebs 27 erfolgt eine Umwandlung des Verstell-Wegs 42 der Spindel 29 in einen Verstell-Drehwinkel 44.

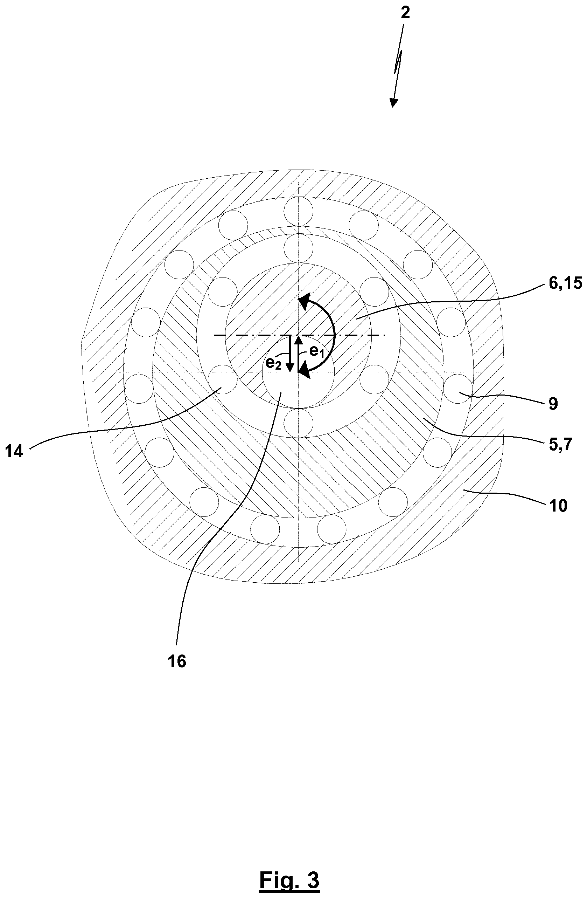

**Fig. 3** zeigt schematisch die Exzenterelemente 5, 6 des Exzentergetriebes 2 in einer Stellung, in welcher die gesamte Exzentrizität E minimal ist, nämlich Null beträgt. Dies entspricht der in Fig. 2 dargestellten Stellung des Exzentergetriebes 2. Es ergibt sich eine minimale Exzentrizität Eₘᵢₙ von Null, da für dieses Ausführungsbeispiel die Beträge der Exzentrizitäten e₁, e₂ gleichgroß gewählt sind. Für die in Fig. 3 dargestellte Stellung des Exzentergetriebes sind die Vektoren der Exzentrizitäten e₁, e₂ entgegengesetzt orientiert, womit sich diese gegenseitig aufheben.

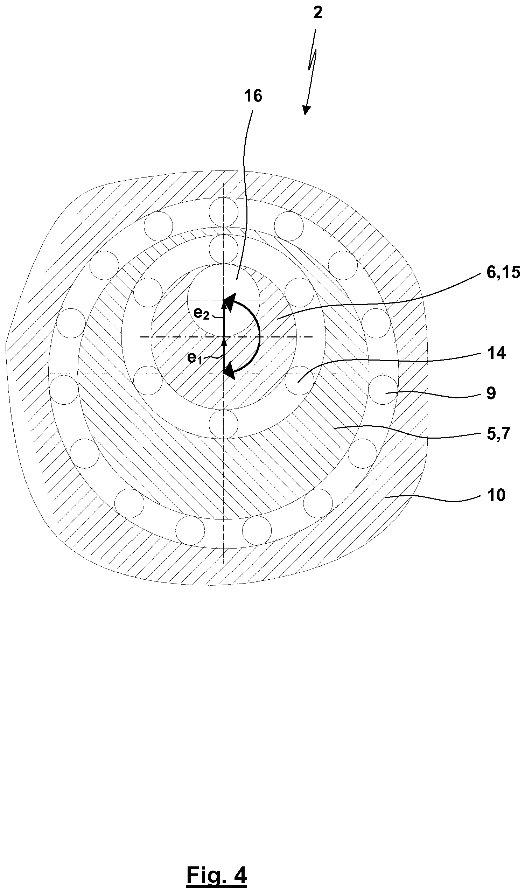

Wird mittels des Aktuators 41 ein Verstell-Weg 42 derart erzeugt, dass eine relative Verdrehung der Exzenterelemente 5, 6 um 180° ergibt, ergibt sich gemäß **Fig. 4** die maximale gesamte Exzentrizität Eₘₐₓ, welche doppelt so groß ist wie die Beträge der Exzentrizitäten e₁, e₂. In diesem Fall sind die Vektoren der beiden Exzentrizitäten e₁, e₂ in dieselbe Richtung orientiert. Für einen kleineren Verstell-Weg 42, welche zu einer relativen Verdrehung der Exzenterelemente 5, 6 um einen Verstell-Winkel 44 zwischen 0° und 180° führt, ergibt sich eine gesamte Exzentrizität E, deren Betrag dem Betrag der Länge des Vektors entspricht, welcher sich aus der vektoriellen Addition der Exzentrizitäten e₁, e₂ ergibt.

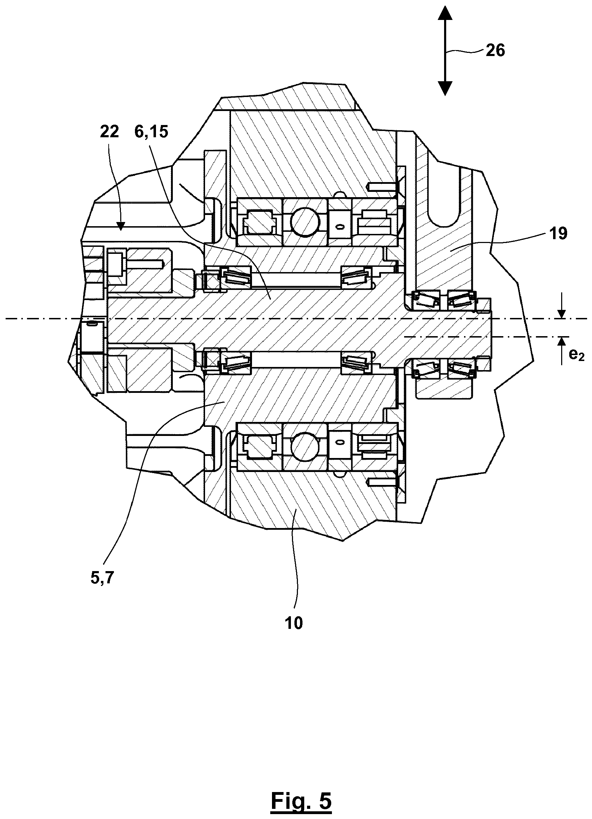

**Fig. 5** zeigt ein Detail V gemäß Fig. 2 für die Realisierung des Exzentergetriebes 2 mit der Lagerung der Exzenterelemente 5, 6 über die Wälzlager 9, 14.

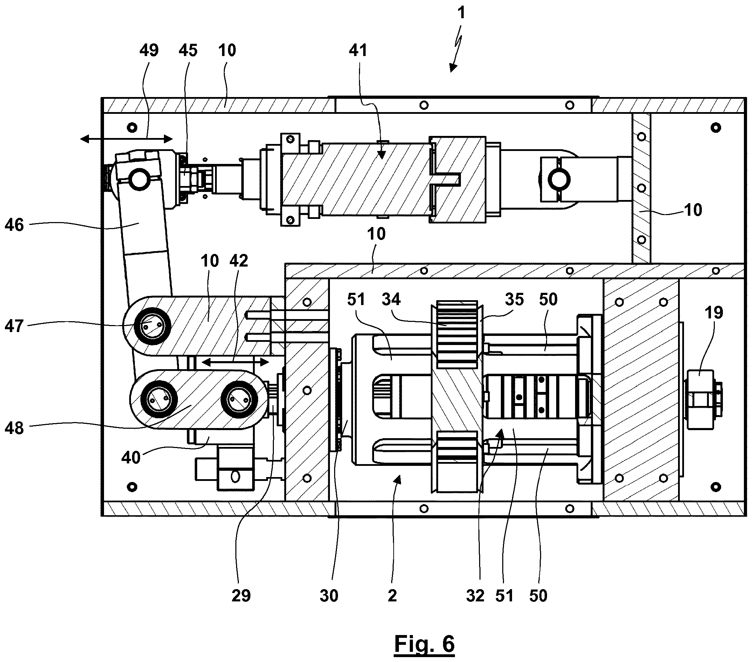

**Fig. 6** zeigt einen Horizontalschnitt durch eine konstruktive Ausgestaltung der Prüfvorrichtung 1. Hier ist der Aktuator 41 seitlich von dem Exzentergetriebe 2 angeordnet. Ein Antriebskörper 45 des Aktuators 41 ist an einem Betätigungshebel 46 angelenkt, der in einem Schwenklager 47 verschwenkbar an dem Gehäuse 10 gelagert ist. Im Endbereich des Hebelteils des Betätigungshebels 46, an welchem der Aktuator 41 nicht angelenkt ist, ist eine Betätigungsschwinge 48 angelenkt, welche verschwenkbar mit dem Antriebskörper 40 verbunden ist. Der Antriebskörper 40 ist entsprechend Fig. 2 über eine Lagereinheit 39, eine Kopplungshülse 38 und ein Ausgleichselement 36 in in Fig. 6 nicht dargestellter Weise mit der Spindel 29 verbunden. Mittels des Betätigungshebels 46 erfolgt einerseits eine Umkehrung des Verstell-Wegs 42 des einen Hebelteils bzw. der Spindel 29 zu einem Aktuator-Weg 49. Der Betätigungshebel 46 ermöglicht, dass der Aktuator 41 seitlich von dem Exzentergetriebe 2 angeordnet ist, womit sich eine kurze Bauweise ergibt. Andererseits kann je nach Verhältnis der Längen der Hebelteile des Betätigungshebels 46 auch eine Unter- oder Übersetzung des Verstell-Wegs 42 gegenüber dem Aktuator-Weg 49 erfolgen, womit auch eine Anpassung der Betätigungskräfte und des Betätigungswegs des Aktuators 41 erfolgen kann.

In Fig. 6 ist auch zu erkennen, dass das Exzentergehäuse 32 in Umfangsrichtung nicht geschlossen ist, sondern vielmehr zwischen dem Exzenterelement 5 und der Spindelmutter 30 über den Umfang verteilte Öffnungen 50 aufweist. Für das in Fig. 6 dargestellte Ausführungsbeispiel ist das Exzentergehäuse 32 mit in axialer Richtung verlaufenden, über den Umfang verteilten Gehäusestreben 51 ausgebildet, über welche das Exzenterelement 5 und die Spindelmutter 30 miteinander verbunden sind und zwischen denen die Öffnungen 50 ausgebildet sind.

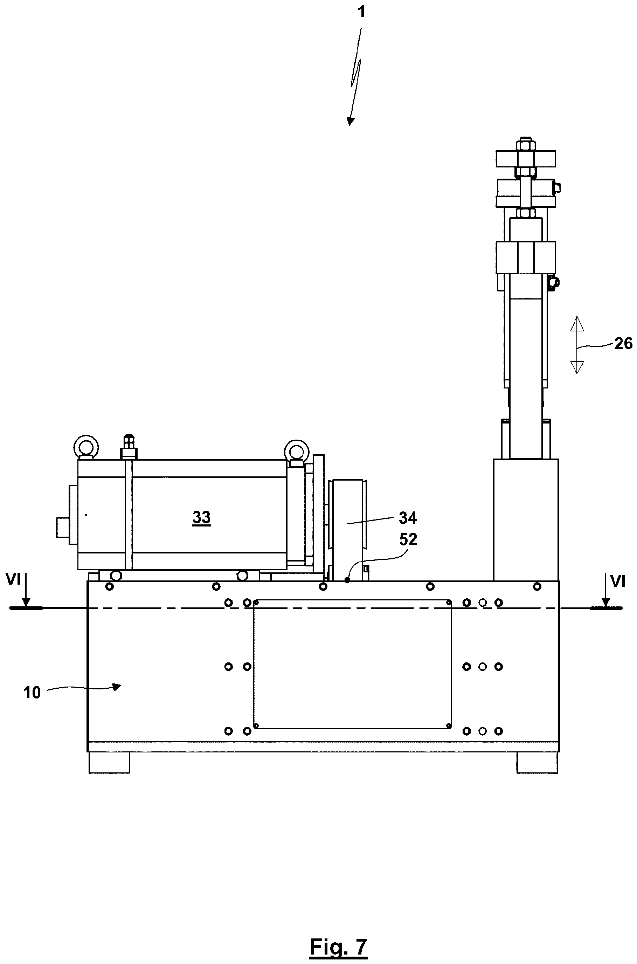

**Fig. 7** zeigt eine Seitenansicht der Prüfvorrichtung 1. Zu erkennen ist hier, dass der Antrieb 33 oberhalb des Aktuators 41, des Betätigungshebels 46, des Umwandlungsgetriebes 3 und des Exzentergetriebes 2 angeordnet ist. Der Antrieb 33 ist auf der Oberseite an dem Gehäuse 10 der Prüfvorrichtung 1 gehalten. Das Gehäuse 10 weist auf der oberen Seite eine Gehäuseöffnung 52 auf, durch welche sich der Riemen 34 in das Innere des Gehäuses 10 zu dem Antriebsrad 35 erstreckt. Des Weiteren zu erkennen ist in Fig. 7, dass hier der Prüfling in vertikaler Richtung turmartig in den Einspannvorrichtungen angeordnet ist und von dem Antriebspleuel 19 mit der dynamischen Prüfbelastung 26 beaufschlagt wird.

Für das dargestellte Ausführungsbeispiel stellt der Antriebszapfen 16 das Exzenter-Abtriebselement 53. Das Exzenter-Abtriebselement 53 kann aber beispielsweise auch von einer exzentrischen Mantelfläche des Exzenterelements 6 gebildet werden.

### BEZUGSZEICHENLISTE

- 1: Prüfvorrichtung
- 2: Exzentergetriebe
- 3: Umwandlungsgetriebe
- 4: Antriebsdrehzahl, Antriebsmoment
- 5: erstes Exzenterelement
- 6: zweites Exzenterelement
- 7: Exzenterhülse
- 8: äußere Lagerfläche
- 9: Wälzlager
- 10: Gehäuse
- 11: innere Lagerfläche
- 12: Antriebsachse
- 13: Lagerachse
- 14: Wälzlager
- 15: Welle
- 16: Antriebszapfen
- 17: Antriebszapfenachse
- 18: Verstelleinrichtung
- 19: Antriebspleuel
- 20: drehfeste Antriebsverbindung
- 21: drehfeste Antriebsverbindung
- 22: Kupplungselement
- 23: Antriebselement
- 24: Abtriebselement
- 25: Verstellung
- 26: dynamische Prüfbelastung
- 27: Spindeltrieb
- 28: Kugelumlauf-Gewindetrieb
- 29: Spindel
- 30: Spindelmutter
- 31: Kugel
- 32: Exzentergehäuse
- 33: Antrieb
- 34: Riemen
- 35: Antriebsrad
- 36: Ausgleichselement
- 37: Betätigungsstange
- 38: Kopplungshülse
- 39: Lagereinheit
- 40: Antriebskörper
- 41: Aktuator
- 42: Verstell-Weg
- 43: Kupplungselement
- 44: Verstell-Drehwinkel
- 45: Antriebskörper
- 46: Betätigungshebel
- 47: Schwenklager
- 48: Betätigungsschwinge
- 49: Aktuator-Weg
- 50: Öffnung
- 51: Gehäusestrebe
- 52: Gehäuseöffnung
- 53: Exzenter-Abtriebselement

## Patentansprüche

1. Prüfvorrichtung (1) für eine Belastung eines Prüflings mit einer dynamischen Prüfbelastung (26) mit
a) einem Antrieb (33),
b) einem Exzentergetriebe (2), welches
ba) mit dem Antrieb (33) in Antriebsverbindung steht,
bb) von dem Antrieb (33) mit einer Antriebsdrehzahl um eine Antriebsachse verdreht wird und
bc) ein Exzenter-Abtriebselement (53) aufweist,
c) wobei das Exzentergetriebe (2)
ca) ein erstes Exzenterelement (5) aufweist, welches drehbar um die Antriebsachse (12) drehbar ist und eine Lagerfläche (11) aufweist, deren Lagerachse (13) mit einer Exzentrizität e₁ exzentrisch zu der Antriebsachse (12) angeordnet ist, und
cb) ein zweites Exzenterelement (6) aufweist, welches drehbar um die Lagerachse (13) gegenüber der Lagerfläche (11) des ersten Exzenterelements (5) abgestützt ist, und
cc) eine Verstelleinrichtung (18) aufweist, über welches der relative Drehwinkel der Exzenterelemente (5, 6) veränderbar ist,
cd) ein Exzenter-Abtriebselement (53) aufweist, über welches ein Abtrieb von dem Exzentergetriebe (2) zu dem Prüfling zur Erzeugung einer dynamischen Prüfbelastung (26) des Prüflings erfolgt,
d) wobei
da) die beiden Exzenterelemente (5, 6) für die Erzeugung der dynamischen Prüfbelastung (26) des Prüflings mit konstanter Amplitude im Block umlaufen und
db) eine Veränderung der Amplitude der dynamischen Prüfbelastung (26) durch eine Betätigung der Verstelleinrichtung (18) erfolgt, welche eine Veränderung des relativen Drehwinkels der Exzenterelemente (5, 6) zur Folge hat,
**dadurch gekennzeichnet, dass**
e) die Verstelleinrichtung (18)
ea) einen Aktuator (41) aufweist, welcher einen translatorischen Verstell-Weg (42) eines Antriebselements (23) erzeugt,
eb) ein Umwandlungsgetriebe (3) aufweist, welches den translatorischen Verstell-Weg (42) des Antriebselements (23) in einen Verstell-Drehwinkel (44) eines Abtriebselements (24) umwandelt,
f) wobei das Antriebselement (23) und das Abtriebselement (24) derart mit den Exzenterelementen (5, 6) gekoppelt sind, dass der Verstell-Drehwinkel (44) mit einer Veränderung des relativen Drehwinkels der Exzenterelemente (5, 6) korreliert.

2. Prüfvorrichtung (1) nach Anspruch 1, **dadurch gekennzeichnet, dass** das Umwandlungsgetriebe (3) einen Spindeltrieb (27) aufweist, der
a) eine axial bewegbar und verdrehbar gelagerte Spindel (29) aufweist, die das Antriebselement (23) bildet, und
b) eine verdrehbar, aber nicht axial bewegbar gelagerte Spindelmutter (30) aufweist, die das Abtriebselement (24) bildet.

3. Prüfvorrichtung (1) nach Anspruch 2, **dadurch gekennzeichnet, dass** der Spindeltrieb (27) als Kugelumlauf-Gewindetrieb (28) oder Rollenumlauf-Gewindetrieb ausgebildet ist.

4. Prüfvorrichtung (1) nach Anspruch 2 oder 3, **dadurch gekennzeichnet, dass** die Spindel (29) über ein Kupplungselement (43) mit dem zweiten Exzenterelement (6) gekoppelt ist, welches eine Drehbewegung der Spindel (29) überträgt, aber den translatorischen Verstell-Weg (42) der Spindel (29) nicht überträgt.

5. Prüfvorrichtung (1) nach einem der Ansprüche 2 bis 4, **dadurch gekennzeichnet, dass** die Spindel (29) über ein Kupplungselement (22) mit dem zweiten Exzenterelement (6) gekoppelt ist, welches eine Drehbewegung der Spindel (29) überträgt und die Exzentrizität e₁ zwischen der Verdrehung des zweiten Exzenterelements (6) um die Lagerachse (13) und der Verdrehung der Spindel (29) um die Antriebsachse (12) ausgleicht.

6. Prüfvorrichtung (1) nach einem der Ansprüche 2 bis 5, **dadurch gekennzeichnet, dass** der Aktuator (41) einen translatorisch bewegten Antriebskörper (40) betätigt, welcher über eine Lagereinheit (39) mit der Spindel (29) gekoppelt ist, welche die translatorische Bewegung des Antriebskörpers (40) auf die Spindel (29) überträgt und eine relative Verdrehung der Spindel (29) gegenüber dem Antriebskörper (40) ermöglicht.

7. Prüfvorrichtung (1) nach Anspruch 6, **dadurch gekennzeichnet, dass** zwischen dem Aktuator (41) und der Spindel (29) ein Ausgleichselement (36) angeordnet ist, welches die translatorische Bewegung des Aktuators (41) überträgt, aber einen radialen Versatz oder einen Winkelfehler der Wirkachse des Aktuators (41) oder Antriebskörpers (40) und der Antriebsachse (12), um welche die Spindel (29) rotiert, ausgleichen kann.

8. Prüfvorrichtung (1) nach einem der vorhergehenden Ansprüche, **dadurch gekennzeichnet, dass** das erste Exzenterelement (5) von einem Exzentergehäuse (32) ausgebildet ist oder mit einem Exzentergehäuse verbunden ist, in dessen Innerem zumindest teilweise
a) die Verstelleinrichtung (18), der Spindeltrieb (27), der Kugelumlauf-Gewindetrieb (28) oder der Rollenumlauf-Gewindetrieb,
b) das Kupplungselement (43), welches eine Drehbewegung der Spindel (29) überträgt, aber den translatorischen Verstell-Weg (42) der Spindel (29) nicht überträgt,
c) das Kupplungselement (22), welches eine Drehbewegung der Spindel (29) überträgt und die Exzentrizität e₁ zwischen der Lagerachse (13) und der Antriebsachse (12) ausgleicht,
d) das zweite Exzenterelement (6) und/oder
e) Wälzlager (14), über die das zweite Exzenterelement (6) an der Lagerfläche (11) des ersten Exzenterelements (5) drehbar gelagert ist,
angeordnet sind/ist.

9. Prüfvorrichtung (1) nach einem der vorhergehenden Ansprüche, **dadurch gekennzeichnet, dass** der Antrieb (33) über einen Riemen (34) mit einem Antriebsrad (35) des Exzentergetriebes (2) in Antriebsverbindung steht.

10. Prüfvorrichtung (1) nach Anspruch 9, **dadurch gekennzeichnet, dass** sich innenliegend von dem Antriebsrad (35)
a) das erste Exzenterelement (5), das Exzentergehäuse (32) oder eine Antriebsverbindung (20) des ersten Exzenterelements (5) und/oder
b) das zweite Exzenterelement (6) oder eine Antriebsverbindung (21) des zweiten Exzenterelements (6)
erstrecken.

11. Prüfvorrichtung (1) nach einem der vorhergehenden Ansprüche, **dadurch gekennzeichnet, dass** das Exzenter-Abtriebselement (53) ein Antriebszapfen (16) für ein Antriebspleuel (19) ist, der mit einer Exzentrizität e₂ gegenüber der Lagerachse (13) des zweiten Exzenterelements (6) angeordnet ist.

12. Prüfvorrichtung (1) nach einem der vorhergehenden Ansprüche, **dadurch gekennzeichnet, dass** der Aktuator (41) seitlich von dem Exzentergetriebe (2) angeordnet ist und/oder der Antrieb (33) über dem Exzentergetriebe (2) angeordnet ist.

## Claims

1. Testing device (1) for biasing a test specimen with a dynamic test load (26) comprising
a) a drive (33),
b) an eccentric transmission (2) which
ba) is drivingly connected to the drive (33),
bb) is rotated by the drive (33) with a driving rotational speed about a driving axle and
bc) comprises an output element (53) of the eccentric transmission,
c) the eccentric transmission(2)
ca) comprising a first element (5) of the eccentric transmission which can be rotated about the driving axle (12) and comprises a bearing surface (11) having a bearing axis (13) arranged eccentrically with an eccentricity e₁ relative to the driving axle (12) and
cb) comprises a second element (6) of the eccentric transmission which is supported for being rotated about the bearing axis (13) relative to the bearing surface (11) of the first element (5) of the eccentric transmission and
cc) comprises an adjusting device (18) by which it is possible to change the relative rotational angle of the elements (5, 6) of the eccentric transmission,
cd) comprises an output element (53) providing an output of the eccentric transmission (2) for the test specimen for generating a dynamic test load (26) of the test specimen,
d) wherein
da) the two elements (5, 6) of the eccentric transmission rotate as a block for generating the dynamic test load (26) of the test specimen with a constant amplitude and
db) an adjustment of the amplitude of the dynamic test load (26) is provided by an actuation of the adjusting device (18) which leads to a change of the relative rotational angle of the elements (5, 6) of the eccentric transmission,
**characterised in that**
e) the adjusting device (18)
ea) comprises an actuator (41) which generates a translational adjusting displacement (42) of an input element (23),
eb) comprises a transformation transmission (3) which transforms the translational adjusting displacement (42) of the input element (23) into an adjusting rotational angle (44) of an output element (24),
f) the input element (23) and the output element (24) being coupled to the elements (5, 6) of the eccentric transmission in a way such that the adjusting rotational angle (44) correlates with a change of the relative rotational angle of the elements (5, 6) of the eccentric transmission.

2. Testing device (1) of claim 1, **characterised in that** the transformation transmission (3) comprises a spindle drive (27) which
a) comprises a spindle (29) which can be moved in axial direction, which is supported for being rotated and which forms the input element (23) and
b) comprises a spindle nut (30) which is rotatable, which is supported for being fixed in axial direction and which forms the output element (24).

3. Testing device (1) of claim 2, **characterised in that** the spindle drive (27) is embodied as a threaded drive (28) comprising circulating balls or as a threaded drive comprising circulating rollers.

4. Testing device (1) of claim 2 or 3, **characterised in that** the spindle (29) is coupled by a coupling element (43) to the second element (6) of the eccentric transmission which transmits a rotating movement of the spindle (29) but which does not transmit the translational adjusting displacement (42) of the spindle (29).

5. Testing device (1) of one of claims 2 to 4, **characterised in that** the spindle (29) is coupled by a coupling element (22) to the second element (6) of the eccentric transmission which transmits a rotational movement of the spindle (29) and which compensates the eccentricity e₁ between the rotation of the second element (6) of the eccentric transmission about the bearing axis (13) and the rotation of the spindle (29) about the driving axle (12).

6. Testing device (1) of one of claims 2 to 5, **characterised in that** the actuator (41) actuates an input body (40) which can be moved with a translational movement and which is coupled by a bearing unit (39) to the spindle (29), the bearing unit (39) transmitting the translational movement of the input body (40) to the spindle (29) and allowing a rotation of the spindle (29) relative to the input body (40).

7. Testing device (1) of claim 6, **characterised in that** a compensating element (36) is arranged between the actuator (41) and the spindle (29), the compensating element (36) transmitting the translational movement of the actuator (41) and the compensating element (36) compensating a radial offset or an angular error of the operational axis of the actuator (41) or input body (40) and the driving axis (12) about which the spindle (29) rotates.

8. Testing device (1) of one of the preceding claims, **characterised in that** the first element (5) of the eccentric transmission is formed by a housing (32) of the eccentric transmission or connected to the same, wherein
a) the adjusting device (18), the spindle drive (27), the threaded drive (28) comprising circulating balls or the threaded drive comprising circulating rollers,
b) the coupling element (43) which transmits a rotational movement of the spindle (29) but which does not transmit the translational adjusting displacement (42) of the spindle (29),
c) the coupling element (22) which transmits a rotational movement of the spindle (29) and which compensates the eccentricity e₁ between the bearing axis (13) and the driving axis (12),
d) the second element (6) of the eccentric transmission and/or
e) bearings (14) by which the second element (6) of the eccentric housing is supported for being rotated on the bearing surface (11) of the first element (5) of the eccentric transmission
is/are at least partially arranged within the housing of the eccentric transmission.

9. Testing device (1) of one of the preceding claims, **characterised in that** the drive (33) drives an input gear (35) of the eccentric transmission (2) via a belt (34).

10. Testing device (1) of claim 9, **characterised in that**
a) the first element (5) of the eccentric transmission, the housing (32) of the eccentric transmission or an input or driving connection (20) of the first element (5) of the eccentric transmission and/or
b) the second element (6) of the eccentric transmission or an input or driving connection (21) of the second element (6) of the eccentric transmission
extend within the input wheel (35).

11. Testing device (1) of one of the preceding claims, **characterised in that** the output element (53) of the eccentric transmission is embodied as an input journal (16) for a driving connection rod (19) which is arranged with an eccentricity e₂ relative to the bearing axis (13) of the second element (6) of the eccentric transmission.

12. Testing device (1) of one of the preceding claims, **characterised in that** the actuator (41) is arranged laterally from the eccentric transmission (2) and/or the drive (33) is arranged above the eccentric transmission (2).

## Revendications

1. Dispositif d'essai (1) pour une sollicitation d'un échantillon avec une charge d'essai dynamique (26), avec
a) un entraînement (33),
b) un engrenage excentrique (2) qui
ba) est en liaison d'entraînement avec l'entraînement (33),
bb) est mis en rotation par l'entraînement (33) avec une vitesse de rotation d'entraînement autour d'un axe d'entraînement et
bc) comprend un élément de sortie excentrique (53),
c) dans lequel l'engrenage excentrique (2)
ca) comprend un premier élément excentrique (5) qui est rotatif autour de l'axe d'entraînement (12) et qui comprend une surface de palier (11) dont l'axe de palier (13) est disposé de manière excentrique par rapport à l'axe d'entraînement (12) avec une excentricité e₁ et
cb) comprend un deuxième élément excentrique (6) qui est appuyé de manière rotative autour de l'axe de palier (13) par rapport à la surface de palier (11) du premier élément excentrique (5) et
cc) comprend un dispositif de réglage (18) par l'intermédiaire duquel l'angle de rotation relatif des éléments excentriques (5, 6) peut être modifié,
cd) comprend un élément de sortie excentrique (53) par l'intermédiaire duquel une sortie a lieu de l'engrenage excentrique (2) vers l'échantillon pour la production d'une sollicitation d'essai dynamique (26) de l'échantillon,
d) dans lequel
da) les deux éléments excentriques (5, 6) circulent dans le bloc pour la production de la sollicitation d'essai dynamique (26) de l'échantillon avec une amplitude constante et
db) une modification de l'amplitude de la sollicitation d'essai dynamique (26) a lieu à l'aide d'un actionnement du dispositif de réglage (18) qui permet une modification de l'angle de rotation relatif des éléments excentriques (5, 6),
**caractérisé en ce que**
e) le dispositif de réglage (18)
ea) comprend un actionneur (41) qui produit un trajet de réglage en translation (42) d'un élément d'entraînement (23),
eb) comprend un engrenage de conversion (3) qui convertit le trajet de réglage en translation (42) de l'élément d'entraînement (23) en un angle de rotation de réglage (44) d'un élément de sortie (24),
f) dans lequel l'élément d'entraînement (23) et l'élément de sortie (24) sont couplés avec les éléments excentriques (5, 6) de façon à ce que l'angle de rotation de réglage (44) soit corrélé avec une modification de l'angle de rotation relatif des éléments excentriques (5, 6).

2. Dispositif d'essai (1) selon la revendication 1, **caractérisé en ce que** l'engrenage de conversion (3) comprend un mécanisme à broche (27) qui
a) comprend une broche (29) logée de manière mobile axialement et rotative qui constitue l'élément d'entraînement (23) et
b) un écrou de broche (30) logé de manière rotative mais par mobile axialement, qui constitue l'élément de sortie (24).

3. Dispositif d'essai (1) selon la revendication 2, **caractérisé en ce que** le mécanisme à broche (27) est conçu comme un mécanisme à filet à circulation de billes (28) ou un mécanisme à filet à circulation de rouleaux.

4. Dispositif d'essai (1) selon la revendication 2 ou 3, **caractérisé en ce que** la broche (29) est couplé par l'intermédiaire d'un élément de couplage (43) avec le deuxième élément excentrique (6), qui transmet un mouvement de rotation de la broche (29) mais ne transmet pas le trajet de réglage en translation (42) de la broche (29).

5. Dispositif d'essai (1) selon l'une des revendications 2 à 4, **caractérisé en ce que** la broche (29) est couplée par l'intermédiaire d'un élément de couplage (22) avec le deuxième élément excentrique (6), qui transmet un mouvement de rotation de la broche (29) et compense l'excentricité e₁ entre la rotation du deuxième élément excentrique (6) autour de l'axe de palier (13) et la rotation de la broche (29) autour de l'axe d'entraînement (12).

6. Dispositif d'essai (1) selon l'une des revendications 2 à 5, **caractérisé en ce que** l'actionneur (41) actionne un corps d'entraînement (40) mobile en translation, qui est couplé par l'intermédiaire d'une unité de palier (39) avec la broche (29), qui transmet le mouvement de translation du corps d'entraînement (40) à la broche (29) et qui permet une rotation relative de la broche (29) par rapport au corps d'entraînement (40).

7. Dispositif d'essai (1) selon la revendication 6, **caractérisé en ce que**, entre l'actionneur (41) et la broche (29), est disposé un élément de compensation (36) qui transmet le mouvement de translation de l'actionneur (41) mais peut compenser un décalage radial ou une erreur angulaire de l'axe actif de l'actionneur (41) ou du corps d'entraînement (40) et de l'axe d'entraînement (12) autour duquel la broche (29) tourne.

8. Dispositif d'essai (1) selon l'une des revendications précédentes, **caractérisé en ce que** le premier élément excentrique (5) est constitué d'un boîtier excentrique (32) ou est relié avec un boîtier excentrique à l'intérieur duquel est/sont disposé(s), au moins partiellement
a) le dispositif de réglage (18), le mécanisme à broche (27), le mécanisme à filet à circulation de billes (28) ou le mécanisme à filet à circulation de rouleaux,
b) l'élément de couplage (43) qui transmet un mouvement de rotation de la broche (29) mais ne transmet pas le trajet de réglage en translation (42) de la broche (29),
c) l'élément de couplage (22) qui transmet un mouvement de rotation de la broche (29) et compense l'excentricité e₁ entre l'axe de palier (13) et l'axe d'entraînement (12),
d) le deuxième élément excentrique (6) et/ou
e) des paliers à rouleaux (14), par l'intermédiaire desquels le deuxième élément excentrique (6) est monté de manière rotative au niveau de la surface de palier (11) du premier élément excentrique (5).

9. Dispositif d'essai (1) selon l'une des revendications précédentes, **caractérisé en ce que** l'entraînement (33) est en liaison d'entraînement, par l'intermédiaire d'une courroie (34), avec une roue d'entraînement (35) de l'engrenage excentrique (2).

10. Dispositif d'essai (1) selon la revendication 9, **caractérisé en ce que** à l'intérieur par rapport à la roue d'entraînement (35), s'étendent
a) le premier élément excentrique (5), le boîtier excentrique (32) ou une liaison d'entraînement (20) du premier élément excentrique (5) et/ou
b) le deuxième élément excentrique (6) ou une liaison d'entraînement (21) du deuxième élément excentrique (6).

11. Dispositif d'essai (1) selon l'une des revendications précédentes, **caractérisé en ce que** l'élément de sortie excentrique (53) est un tourillon d'entraînement (16) pour une bielle d'entraînement (19), avec une excentricité e₂ par rapport à l'axe de palier (13) du deuxième élément excentrique (6).

12. Dispositif d'essai (1) selon l'une des revendications précédentes, **caractérisé en ce que** l'actionneur (41) est disposé sur le côté de l'engrenage excentrique (2) et/ou l'entraînement (33) est disposé au-dessus de l'engrenage excentrique (2).
